# EUROPÄISCHE PATENTSCHRIFT

(11) **EP 0 629 014 B1**
(45) Veröffentlichungstag und Bekanntmachung des Hinweises auf die Patenterteilung: **16.04.1997**
(21) Anmeldenummer: 94107592.1
(22) Anmeldetag: 17.05.1994
(51) Int. Cl.: H01M 8/04

(54) **Verfahren und Vorrichtung zur Befeuchtung von Prozessgas für den Betrieb von Brennstoffzellensystemen**
Method and device for humidyfying reaction gas for operating fuel cell systems
Procédé et dispositif pour humidifier le gaz réactif pour opérer des systèmes de piles à combustible

(30) Priorität: 07.06.1993 DE 4318818
(43) Veröffentlichungstag der Anmeldung: 14.12.1994
(73) Patentinhaber: DAIMLER-BENZ AKTIENGESELLSCHAFT, 70567 Stuttgart (DE)
(72) Erfinder: Benz, Uwe, D-88690 Uhldingen (DE); Fleck, Wolfram, D-89155 Erbach (DE); Hornburg, Gerald, D-88069 Tettnang (DE)

(56) Entgegenhaltungen:
- EP-A- 0 301 757
- EP-A- 0 316 626
- US-A- 4 080 791
- US-A- 4 818 637
- US-A- 4 973 530
- PATENT ABSTRACTS OF JAPAN vol. 009 no. 295 (E-360) ,21.November 1985 & JP-A-60 136178 (NIHON NENRIYOU GIJUTSU KAIHATSU KK;OTHERS: 01) 19.Juli 1985,
- PATENT ABSTRACTS OF JAPAN vol. 007 no. 247 (E-208) ,2.November 1983 & JP-A-58 133773 (HITACHI SEISAKUSHO KK) 9.August 1983,
- PATENT ABSTRACTS OF JAPAN vol. 013 no. 031 (E-707) ,24.Januar 1989 & JP-A-63 232273 (HITACHI LTD) 28.September 1988,

## Beschreibung

Die Erfindung betrifft ein Verfahren und eine Vorrichtung zur Befeuchtung von Prozeßgas für den Betrieb von Brennstoffzellensystemen gemäß dem Oberbegriff des Patentanspruchs 1.

Um ein Austrocknen der Elektrolytmembran zu vermeiden ist es bei Brennstoffzellen, insbesondere solchen mit protonenleitenden Elektrolytmembranen (PEM-Zellen), notwendig, daß die Prozeßgase, also die Luft und das Brenngas, befeuchtet werden. Bisher war es bekannt, Gase mit Hilfe eines Perlatorbades, über den Kontakt mit wasserüberströmten Wänden (Rieselfilm), über Schüttbettkolonnen oder durch Einsprühen von Dampf zu Befeuchten. Die US-PS 47 38 903 zeigt beispielsweise ein Brennstoffzellensystem, bei dem dem Anodengas Wasserdampf zugeführt wird. Der Nachteil dieser Befeuchtereinheiten ist die relativ große Bauart, die nicht ausreichende dynamische Regelbarkeit und der fehlende Frostschutz.

Außerdem ist aus der EP-A-0301757 eine Vorrichtung bekannt, bei der seine Wassertröpfchen mit Hilfe einer Venturi-Düse in das Prozeßgas eingebracht wird.

Die Aufgabe der Erfindung besteht darin, ein Verfahren und eine Vorrichtung zu schaffen, mit dem die Feuchtigkeit der Prozeßluft vor dem Eintritt in die Brennstoffzelle schnell auf einen in Abhängigkeit von Betriebsparametern vorgegebenen Sollwert eingestellt werden kann.

Die Aufgabe wird erfindungsgemäß durch die kennzeichnenden Merkmale des Patentanspruchs 1 beziehungsweise 3 gelöst.

Durch die Wassereinspritzung ist es möglich, die zugeführte Wassermenge exakt zu dosieren, wodurch die Feuchtigkeit der Prozeßgase genau eingestellt werden kann. Durch die Verwendung schnell schaltender Magnetventile bei der Dosierung kann zudem eine hochdynamische Anpassung an Laständerungen gewährleistet werden. Die Wassereinspritzung kann sowohl für die Befeuchtung der Prozeßluft, als auch für die Befeuchtung des Brenngases, beispielsweise Wasserstoff, verwendet werden.

Prozeßgase, insbesondere die Prozeßluft, werden vor dem Eintritt in die Brennstoffzelle mit Hilfe eines Verdichters komprimiert. Da sich bei der Komprimierung die Temperatur der Prozeßluft erhöht, werden die in die Luftzuführungsleitung eingespritzten Wassertröpfchen teilweise verdampft, wobei der komprimierten Prozeßluft die Verdampfungswärme entzogen wird. Dadurch ergibt sich der zusätzliche Vorteil, daß die Prozeßluft durch die Wassereinspritzung gleichzeitig auch gekühlt wird, so daß auf einen zusätzlichen Luftkühler verzichtet werden kann.

Sollte die Energie der komprimierten Luft nicht ausreichen, die gesamte zur Befeuchtung notwendige Wassermenge zu verdampfen, so werden die Wassertröpfchen unter Bildung eines Aerosolluftstromes in die Brennstoffzelle transportiert. Um dabei das Abscheiden der Wassertröpfchen an den Eingangsquerschnitten der Gasführungskanäle in der Brennstoffzelle zu verhindern, muß der Tröpfchenquerschnitt zumindest kleiner als der Eingangsquerschnitt der Gasführungskanäle sein.

Weitere Vorteile und Ausgestaltungen gehen aus den Unteransprüchen und der Beschreibung hervor. Die Erfindung ist nachstehend anhand einer Zeichnung näher beschrieben, die den prinzipiellen Aufbau einer erfindungsgemäßen Luftversorgungseinheit eines Brennstoffzellensystems zeigt.

Obwohl im folgenden nur die Befeuchtung von Prozeßluft beschrieben wird, kann das Verfahren und die Vorrichtung auch zur Befeuchtung von Brenngas oder bei Verwendung eines beliebig anderen gasförmigen Oxidationsmittels eingesetzt werden.

Das Brennstoffzellensystem besteht aus einer Brennstoffzelle 1, beziehungsweise einem Brennstoffzellenstack, der über eine Luftzuführungsleitung 2 mit Prozeßluft versorgt wird. Nicht dargestellt ist die Luftabführungsleitung und das Brenngassystem, mit welchem die Brennstoffzelle 1 mit Brenngas, beispielsweise Wasserstoff, beaufschlagt wird. Bei der Reaktion des Wasserstoffs mit dem in der Prozeßluft enthaltenen Sauerstoff in der Brennstoffzelle 1 wird neben der elektrischen Energie auch Produktwasser und Reaktionswärme erzeugt, wobei das Produktwasser und die Reaktionswärme weitgehend mit der Prozeßluft aus der Brennstoffzelle 1 abgeführt wird. Gleichzeitig ist der Luftvolumenstrom beim Verlassen der Brennstoffzelle 1 um den konsumierten Sauerstoffanteil reduziert.

In der Luftzuführungsleitung 2 ist ein Verdichter 3 zur Komprimierung der Prozeßluft und eine Mischkammer 4 angeordnet. In der Mischkammer 4 ist eine Einspritzdüse 5, die über eine Versorgungsleitung 6 mit einem nicht dargestellten Wasser-Vorratsbehälter verbunden ist, vorgesehen. Zur Dosierung der Einspritzmenge ist in der Versorgungsleitung 6 ein Magnetventil 7 angeordnet, wobei die Wassermenge direkt über die Durchflußmenge oder bei einem getakteten Magnetventil anhand der Taktfrequenz und der Schließzeit pro Intervall eingestellt wird. Außerdem kann auch ein mechanischer Mengenteiler verwendet werden.

Das Wasser wird über die Einspritzdüse 5 in Form feiner Tröpfchen in die Luftzuführungsleitung 2 eingespritzt. Die Zerstäubung des Wassers kann mit Hilfe eines Ultraschallzerstäubers oder, wie im Ausführungsbeispiel gezeigt, mit Hilfe einer luftgestützten Einspritzdüse 5 erfolgen. Die für die Zerstäubung benötigte Luft wird über eine Leitung 8, die stromauf der Mischkammer 4 von der Luftzuführungsleitung 2 abzweigt, herangeführt. Die Ansteuerung des Magnetventils 7 erfolgt über ein Steuergerät 9, in welchem in Abhängigkeit von Betriebsparametern ein Sollwert für die zuzuführende Wassermenge ermittelt wird. Der Sollwert wird in Abhängigkeit vom Luftvolumenstrom, welcher mit Hilfe eines in der Luftzuführungsleitung 2 angeordneten Sensors 10 gemessen wird, ermittelt. Zusätzlich kann in die Sollwertermittlung auch noch die Lufttemperatur oder oder andere brennstoffzellenspezifische Parameter eingehen.

Zur Gewährleistung eines ausreichenden Wirkungsgrades muß die Prozeßluft beim Eintritt in die Brennstoffzelle eine vorgegebene Temperatur und eine vorgegebene Feuchtigkeit aufweisen. Zur Einstellung der Feuchtigkeit wird daher im allgemeinen in der Luftzuführungsleitung 2 ein Luftbefeuchter angeordnet. Da sich die Prozeßluft nach dem Durchgang durch den Verdichter 3 auf Temperaturen bis zu 150° C erhöht, kann zusätzlich ein Ladeluftkühler notwendig sein. Da in dieser heißen Prozeßluft zumindest ein Teil der Wassertröpfchen verdampfen und dabei der Prozeßluft die Verdampfungswärme entziehen, wird die Temperatur der Prozeßluft zumindest soweit verringert, daß auf den Einsatz eines zusätzlichen Ladeluftkühlers verzichtet werden kann. Im allgemeinen wird jedoch der Energieinhalt der Prozeßluft nicht ausreichen, die gesamte zur Befeuchtung notwendige Wassermenge zu verdampfen. Daher muß ein Teil des Wassers in flüssiger Phase transportiert werden. Die maximal zulässige Tröpfchengröße wird dabei durch die Geometrie der Gasführungskanäle der Brennstoffzelle bestimmt. Damit die Tröpfchen durch die engen Kanäle passen und nicht bereits beim Eintritt die Querschnitte verstopfen, sollten sie vorzugsweise einen Durchmesser im Bereich zwischen 5 und 15 µm aufweisen.

Die Mischkammer 4 kann stromauf oder stromab des Verdichters 3 angeordnet werden. Wird das Wasser vor der Verdichtung eingespritzt, so wird die Verdichterleistung um 6-8% reduziert. In diesem Fall wird dem Gas nämlich die bei der Komprimierung anfallende Energie direkt als Verdampfungswärme entzogen, während bei der nachträglichen Wassereinspritzung die Gastemperatur bei der politropen Verdichtung zunächst erhöht und erst anschließend durch Entzug der Verdampfungswärme wieder gesenkt wird.

Da Brennstoffzellen empfindlich gegen Verunreinigungen sind, kann zur Gasbefeuchtung im allgemeinen ausschließlich Reinstwasser verwendet werden. Zudem ist bei den bekannten Befeuchtereinheiten ein großes Bauvolumen ständig mit Wasser gefüllt. Dadurch wird es fast unmöglich, das System gegen Frostschäden zu schützen, was vor allem bei mobilen Anwendungen, beispielsweise im Fahrzeug, sehr wichtig wäre. Bei der erfindungsgemäßen Vorrichtung ist dies leichter möglich, da nur der Vorratsbehälter und die Versorgungsleitung 6 ständig mit Reinstwasser gefüllt sind. Diese relativ kleinen Bauteile können aber durch geeignete Isoliermaßnahmen oder durch ein Heizsystem vor Frostschäden geschützt werden. Außerdem sind die Gasführungskanäle in der Brennstoffzelle 1 nicht völlig mit Wasser ausgefüllt, so daß beim Einfrieren auch innerhalb der Brennstoffzelle 1 keine Schäden auftreten können.

Das erfindungsgemäße Befeuchtersystem benötigt gegenüber bekannten Systemen zur Befeuchtung von Prozeßgasen von Brennstoffzellen 1 deutlich weniger Bauraum. Außerdem kann die zugeführte Wassermenge extrem schnell an dynamische Laständerungen angepaßt werden.

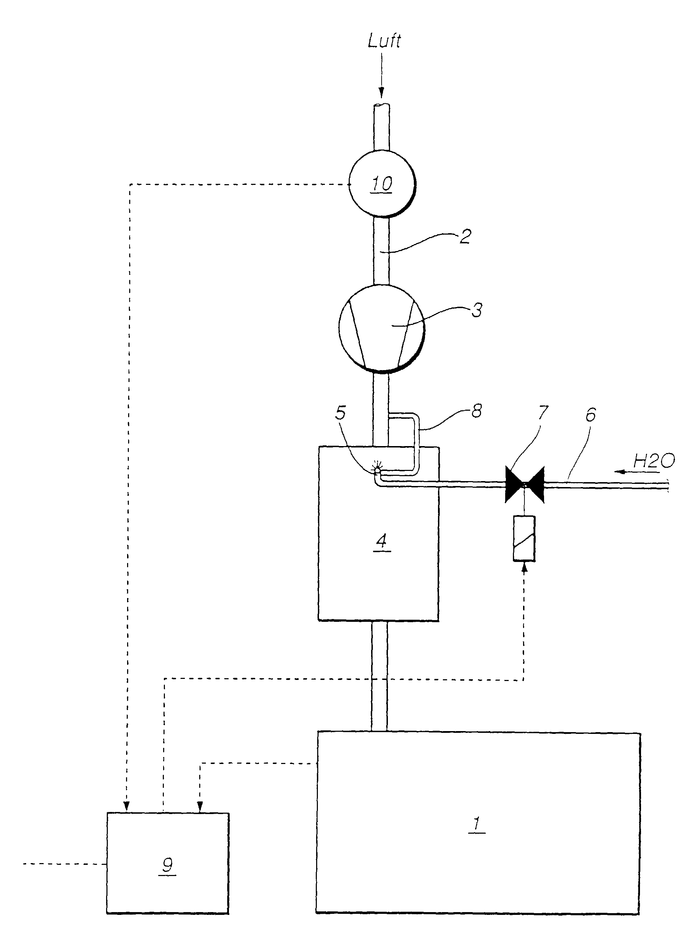

## Patentansprüche

1. Verfahren zur Befeuchtung von Prozeßgas für den Betrieb von Brennstoffzellen, bei dem fein zerstäubtes Wasser in einer vorgegebenen Menge mit Hilfe einer Einspritzdüse (5) aus einer Versorgungsleitung (6) in eine Gaszuführungsleitung (2) der Brennstoffzelle (1) eingespritzt wird, wobei ein Sollwert für die zuzuführende Wassemenge in Abhängigkeit von Betriebsparametern ermittelt und durch Ansteuerung eines in der Versorgungsleitung (6) angeordneten Dosierventils (7) eingestellt wird.

2. Verfahren nach Anspruch 1,
**dadurch gekennzeichnet**,
daß die Prozeßluft einer luftatmenden Brennstoffzelle (1) befeuchtet wird.

3. Vorrichtung zur Durchführung des Verfahrens nach Anspruch 1, mit einer Brennstoffzelle (1), einer Gaszuführungsleitung (2) zur Zufuhr von Prozeßgas zur Brennstoffzelle (1), einer Einspritzdüse (5) zum Einspritzen von Wasser aus einer mit der Einspritzdüse (5) verbundenen Versorgungsleitung (6) in die Gaszuführungsleitung (2), einer Vorrichtung (5,8) zum Zerstäuben des Wassers, einem in der Versorgungsleitung (6) angeordneten Dosierventil (7) und einem Steuergerät (9) zur Ansteuerung des Dosierventiles (7) in Abhängigkeit von Betriebsparametern.

4. Vorrichtung nach Anspruch 5,
**dadurch gekennzeichnet**,
daß die Vorrichtung (5, 8) zum Zerstäuben des Wassers auf der Basis luftgestützter Einspritzdüsen oder Ultraschall zerstäuber arbeitet.

## Claims

1. A process to humidify process gas for the operation of fuel cells in which a pre-determined volume of finely atomised water is injected from a supply line (6) into a gas supply line (2) in the fuel cell (1) by means of an injection nozzle (5), whereby a reference value for the volume of water to be supplied is calculated on the basis of operating parameters and set by the actuation of a metering valve (7) located in the supply line (6).

2. A process in accordance with Claim 1,
**characterised in that** the process air of an air-breathing fuel cell (1) is humidified.

3. A device to carry out the process in accordance with Claim 1 with a fuel cell (1), a gas supply line (2) to supply process gas to the fuel cell (1), an injection nozzle (5) to inject water from a supply line (6) connected to the injection nozzle (5) into the gas supply line (2), a device (5, 8) to atomise the water, a metering valve (7) positioned in the supply line (6) and a control device (9) to actuate the metering valve (7) in accordance with operating conditions parameters.

4. A device in accordance with Claim 3,
**characterised in that** the device (5, 8) to atomise the water works on the basis of air-assisted injection nozzles or ultra sound atomisers.

## Revendications

1. Procédé pour humidifier un gaz réactif pour le fonctionnement de piles à combustible, selon lequel on injecte de l'eau finement pulvérisée en une quantité prédéterminée, à l'aide d'une buse d'injection (5), dans une canalisation d'amenée de gaz (2) de la pile à combustible (1), à partir d'une canalisation d'alimentation (6), une valeur de consigne pour la quantité d'eau devant être amenée étant déterminée en fonction de paramètres de fonctionnement et étant réglée au moyen de la commande d'une soupape de dosage (7) disposée dans la canalisation d'alimentation (6).

2. Procédé selon la revendication 1, caractérisé en ce qu'on humidifie l'air de traitement d'une pile à combustible (1) respirant de l'air.

3. Dispositif pour la mise en oeuvre du procédé selon la revendication 1, comportant une pile à combustible (1), une canalisation d'amenée de gaz (2) pour amener un gaz réactif à la pile à combustible (1), une buse d'injection (5) pour injecter de l'eau provenant d'une canalisation d'alimentation (6) reliée à la buse d'injection (5), dans la canalisation d'amenée de gaz (2), un dispositif (5,8) pour pulvériser l'eau, une soupape de dosage (7) disposée dans la canalisation d'alimentation (6), et un appareil de commande (9) pour commander la soupape de dosage (7) en fonction de paramètres de fonctionnement.

4. Dispositif selon la revendication 3 , caractérisé en ce que le dispositif (5,8) servant à pulvériser l'eau travaille sur la base de buses d'injection ou d'un pulvérisateur à ultrasons, dont le fonctionnement est assisté par de l'air.
